(19) Europäisches Patentamt
European Patent Office
Office européen des brevets

(11) **EP 3 091 399 B1**

(12) **EUROPEAN PATENT SPECIFICATION**

(45) Date of publication and mention
of the grant of the patent:
**21.11.2018 Bulletin 2018/47**

(51) Int Cl.:
**G03G 15/20** (2006.01)   **B32B 5/02** (2006.01)
**F16C 17/00** (2006.01)   **F16C 33/18** (2006.01)
**F16C 33/20** (2006.01)

(21) Application number: **14874220.8**

(22) Date of filing: **25.12.2014**

(86) International application number:
**PCT/JP2014/084278**

(87) International publication number:
**WO 2015/099025 (02.07.2015 Gazette 2015/26)**

(54) **LOW-FRICTION SLIDING MATERIAL AND LOW-FRICTION PRESSURIZING MEMBER FOR TONER FIXING DEVICES**

REIBUNGSARMES GLEITMATERIAL UND REIBUNGSARMES DRUCKBEAUFSCHLAGUNGSELEMENT FÜR TONERFIXIERVORRICHTUNGEN

MATÉRIAU DE GLISSEMENT À FAIBLE FROTTEMENT ET ÉLÉMENT DE MISE EN PRESSION À FAIBLE FROTTEMENT DE DISPOSITIFS DE FIXATION D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2013 JP 2013269336**

(43) Date of publication of application:
**09.11.2016 Bulletin 2016/45**

(73) Proprietor: **Toray Industries, Inc.**
**Tokyo 103-8666 (JP)**

(72) Inventors:
• **TONOMORI, Keiichi**
**Otsu-shi, Shiga 520-2141 (JP)**
• **TSUCHIKURA, Hiroshi**
**Otsu-shi, Shiga 520-2141 (JP)**
• **TOKUDA, Akihiro**
**Otsu-shi, Shiga 520-2141 (JP)**

(74) Representative: **Webster, Jeremy Mark et al**
**Mewburn Ellis LLP**
**City Tower**
**40 Basinghall Street**
**London EC2V 5DE (GB)**

(56) References cited:
EP-A1- 2 677 071      JP-A- H04 119 224
JP-A- H04 119 224    JP-A- S59 212 522
JP-A- 2000 154 824   JP-A- 2000 154 824
JP-A- 2008 070 913   JP-A- 2008 070 913
JP-A- 2010 164 999   JP-A- 2011 042 413
US-A1- 2013 330 111

**Description**

Technical Field

The present invention relates to a sliding material having low-friction properties and the sliding material for use as a pressurizing sliding member in toner fixing device applications.

Background Art

Conventionally, sliding materials requiring low-friction properties have been used, such as those in which fluorine resins are laminated or coated on the surface of sliding members and those in which fabrics, such as knitted fabrics or nonwoven fabrics, obtained by fiberizing and weaving fluorine resins are disposed on the surface of sliding members.
Lamination and coating of fluorine resins, however, are disadvantageous in that fluorine resin coatings formed are thin and easily peeled off because they are non-adhesive.
On the other hand, many techniques using fluorine resin fiber fabrics are disclosed.

Prior Art Documents

Patent Documents

For example, Patent Document 1 discloses a technique of a bearing structure having excellent lubricity, the structure including a substrate and a sliding unit, wherein the surface of the sliding unit is covered with a fiber fabric having, at least on its surface, a polytetrafluoroethylene fiber with a single yarn fineness of 3.5 d (3.9 dtex) or less.
Furthermore, in Patent Document 2, a fabric including a fluorine fiber on one surface is provided to reduce friction of a rubber cushion for use for stabilizer bars of automobiles, and in Patent Document 3, a fabric liner including a fluorine fiber is provided on a bearing sliding surface of a stabilizer bush in order to improve sliding properties. Furthermore, Patent Document 4 discloses a seismic isolation system for architectural structures including a lower plate having a lower abutment with an arcuately concave surface, an upper plate having an upper abutment with an arcuately concave surface, and a sliding body interposed between the lower abutment of the lower plate and the upper abutment of the upper plate, the sliding body having arcuately convex upper and lower surfaces each in plane contact with the upper abutment of the upper plate and the lower abutment of the lower plate, wherein a fluorine resin fiber woven fabric is used as a surface material of a sliding member of the sliding body. Furthermore, in Patent Document 5, a fluorine fiber woven fabric is used on a sliding member surface as a pressurizing low-friction sliding member for use in toner fixing devices that are incorporated, for example, into imaging devices such as copiers and printers.

  Patent Document 1: Utility Model Application Publication No. 01-98921
  Patent Document 2: JP 2008-150724 A
  Patent Document 3: JP 2009-35827 A
  Patent Document 4: JP 2008-45722 A
  Patent Document 5: JP 2010-164999 A

JP 2000 154824 describes a double layer slide bearing in which a porous metal powder sintered layer is provided on a back metal and a slide surface layer which is a mixed woven cloth of a fluorine resin fiber with polyamide fiber. The mixed woven cloth is woven in a twill weave or satin weave so that the fluoro resin fiber is extended along the slide direction and the polyamide fiber 4 exposed on the slide surface is dotted and arranged along desired slant angles.
US 2013/330111 describes a fixing device that includes a rotatable, flexible fuser belt, a fuser pad, and a pressure member. The fuser pad extends in an axial, longitudinal direction thereof inside the loop of the fuser belt, and includes an upstream section, a midstream section, and a downstream section arranged in series from upstream to downstream in the conveyance direction. The fuser pad may optionally have a covering of anti-friction material, for example, a web or mesh of PTFE fibers or fluorine coated glass fibers.
JP 2008 070913 describes a fixing device which includes a non-rotating pressure member which may have a fluorine fiber sheet provided with and without a fluorine oil lubricant.
JP H04 119224 describes a yarn formed of fluorine fibers and other fibers impregnated with a resin and processed by a filament winder. The resin formed is described as having improved sliding and strength.
EP 2 677 071 describes a cover fabric for a power transmission belt. The cover fabric contains a yarn comprises a fluorine-based fiber which is formed of a least one slit yarn, The cover fabric is subjected to adhesion treatment.
JP 2011 042413 describes a moving handrail. A canvas of fluoro-resin fiber is used to lower friction on the inner side of the moving handrail.

Summary of the Invention

Problems to be Solved by the Invention

Although numbers of low-friction sliding materials are proposed as described above in which the sliding member surface is covered with a fluorine fiber fabric, adhesion and fixation to substrates are often problematic because fluorine fibers have non-adhesive properties.

In Patent Document 1, to improve the adhesion properties, the fiber fabric needs to be subjected to plasma processing.

The technique disclosed in Patent Document 2 requires that the fabric including a fluorine fiber, to improve the adhesion of the rubber cushion to sliding surfaces, should include a heat-fusible fiber on the other surface. The technique disclosed in Patent Document 3 requires that the fabric liner including a fluorine fiber, to improve the adhesion to rubber substrates, should include on the other surface a dipped yarn produced by coating a fiber other than fluorine fibers with a resin.

Furthermore, the technique disclosed in Patent Document 4 requires that the fluorine resin fiber woven fabric used as a surface material of a sliding member, to improve the integrally bonding properties between the woven fabric and the sliding member, should be stacked on an organic fiber woven fabric, sewed together with a fluorine resin yarn, and impregnated and coated with a thermosetting synthetic resin.

Furthermore, the technique disclosed in Patent Document 5 requires that the fluorine fiber woven fabric, to be anchored to the sliding member surface, should be provided with a plurality of anchor holes and anchor projections should be provided on a substrate at positions corresponding to the anchor holes.

In view of the above necessity of various devices for improving the adhesion properties to produce a sliding member by providing a fluorine fiber fabric having non-adhesive properties on a sliding member surface, it is an object of the present invention to provide a low-friction sliding material including a fluorine fiber disposed on the surface of a sliding member in an extremely easy manner, as compared to the conventional art, without the need for devices for improving the adhesion properties and for the process of making a fluorine fiber fabric.

Means for Solving the Problems

To solve these problems, the low-friction sliding material of the present invention has the structures as defined by claim 1. In the low-friction sliding material of the present invention, the sliding member preferably has corners.

In the low-friction sliding material of the present invention, the fluorine fiber or the fluorine fiber-containing composite fiber is wound around the outer perimeter of the sliding member such that the sliding surface of the sliding member is covered with the fluorine fiber or the fluorine fiber-containing composite fiber.

Also in the low-friction sliding material of the present invention, the sliding surface of the sliding member is preferably covered with the fluorine fiber or the fluorine fiber-containing composite fiber wound around the outer perimeter of the sliding member.

In addition, the low-friction pressurizing member for use in toner fixing devices of the present invention has the following structure: A low-friction pressurizing member for use in toner fixing devices, wherein the low-friction sliding material described above is used as a sliding member that applies pressure during toner fixing in a toner fixing device.

Effects of the Invention

The present invention provides a low-friction sliding material including a fluorine fiber disposed on the surface of a sliding member in an extremely easy manner, as compared to the conventional art, without the need for devices for improving the adhesion properties of a fluorine fiber fabric and for the process of making the fluorine fiber fabric.

Brief Description of the Drawings

FIG. 1 is a schematic view showing an example of a method of disposing a fiber to cover a sliding surface;
FIG. 2 is a schematic view showing another example of a method of disposing a fiber to cover a sliding surface; and
FIG. 3 is a schematic view showing still another example of a method of disposing a fiber to cover a sliding surface.

Description of Embodiments

The low-friction sliding material according to the present invention is characterized in that a fluorine fiber or a fluorine fiber-containing composite fiber is disposed in parallel (or within $\pm 30°$) at least on the outermost part of a sliding surface of a sliding member . The direction of the fiber is substantially the same as a sliding direction(defined as within $\pm 30°$). 60% or more of the sliding surface is covered with the fluorine fiber or the fluorine fiber-containing composite fiber disposed.

As used herein, the phrase "disposed in parallel in a direction substantially the same as a sliding direction" means the state in which adjacent fibers are disposed substantially in parallel without intersecting each other. Ideally, the fiber direction is identical to the sliding direction, but adjacent fibers may be disposed not in exact parallel such that the fibers cross or intersect each other or have irregular gaps, as long as such a state is partial and does not adversely affect the effects of the present invention.

The term "covered" is not limited to the state in which 100% of the sliding surface is completely covered. Covering by disposing the fibers compactly in parallel results in an increased substantial sliding area (contact area) that leads to improved sliding properties, and in the present invention, 60% or more of the area of the sliding surface needs to be covered. Less than 60% coverage of the area of the sliding surface fails to exhibit low-friction properties. More preferably, 80% or more of the area of the sliding surface is covered.

As used herein, the term "sliding surface" refers to a part of a surface that is located in the region where the surface actually slides against an opposite material via a low-friction material, and a part off the region where the surface slides against the opposite material is excluded even if the part is on the same surface as the sliding surface.

The fluorine fiber for use in the present invention is preferably a polytetrafluoroethylene fiber. Examples of the material constituting the polytetrafluoroethylene fiber include tetrafluoroethylene homopolymers and copolymers in which tetrafluoroethylene accounts for 90 mol% or more, preferably 95 mol% or more. In terms of sliding properties, the amount of tetrafluoroethylene units is preferably as large as possible, and homopolymers are more preferred.

Examples of the monomer copolymerizable with tetrafluoroethylene include vinyl fluoride compounds such as trifluoroethylene, trifluorochloroethylene, tetrafluoropropylene, and hexafluoropropylene, and vinyl compounds such as propylene, ethylene, isobutylene, styrene, and acrylonitrile, but are not limited thereto. Of these monomers, vinyl fluoride compounds, in particular, compounds with high fluorine contents are preferred in terms of fiber friction properties.

Fluorine fibers are soft materials and exhibit high abrasion resistance at low-load sliding for their low-friction sliding properties.

Fluorine fiber-containing composite fibers are preferred because the composite fibers compensate the tendency of the fluorine fibers to be worn by high-load sliding, so that the sliding properties can be kept for a long period of time.

Examples of usable fluorine fiber-containing composite fibers include doubled and twisted fibers of fluorine fibers and other fibers and blended spun yarns of fluorine fibers and other fibers. The fluorine fiber content of the blended composite fiber of fluorine fibers and other fibers is preferably as high as possible in terms of sliding properties, and the proportion of fluorine fibers in the composite fiber is preferably 50% by weight or more. Fluorine fibers in an amount of 50% by weight or more can reduce the increase in coefficient of friction.

The fluorine fiber or the fluorine fiber-containing composite fiber for use in the present invention may be in any form, such as monofilament composed of a single filament, multifilament composed of a plurality of filaments, or spun yarn. Monofilament, as compared to multifilament, is advantageous in that the resistance of a single fiber to breakage can be ensured to cause no breakage or fluffing. Although multifilament can cause breakage and fluffing, it is advantageous in that it, if worn topically, does not break soon, and the fluffing can be utilized as a signal for the progress of wear.

The monofilament or multifilament fibers constituting the fluorine fiber or the fluorine fiber-containing composite fiber of the present invention preferably have a total fineness of 50 to 2,000 dtex, more preferably in the range of 100 to 1,000 dtex. When the total fineness of the fibers is 50 dtex or more, the fibers have high strength that leads to increased resistance to breakage. When the total fineness is 2,000 dtex or less, the fibers, when disposed in parallel, cause few irregularities on the surface and thus do not affect the sliding properties, and the fibers have high flexibility and thus easily conform to the shapes of sliding members.

To improve the abrasion resistance, the tensile strength of the other fiber to be combined with the fluorine fiber is preferably higher than the tensile strength of the fluorine fiber. The other fiber is preferably at least one fiber selected from poly-*p*-phenylene terephthalamide, poly-*m*-phenylene isophthalamide, glass, carbon, poly-*p*-phenylene benzobisoxazole (hereinafter referred to as PBO), and polyphenylene sulfide (hereinafter referred to as PPS). Furthermore, it is preferable to use a fiber whose creep rate under a load that is 20% of the breaking strength under standard conditions (20°C $\times$ 65% RH) is lower than the creep rate of the fluorine fiber. Among the above fibers, PPS fibers, which have durability such as heat resistance, chemical resistance, and hydrolysis resistance in harsh environments, are more preferred.

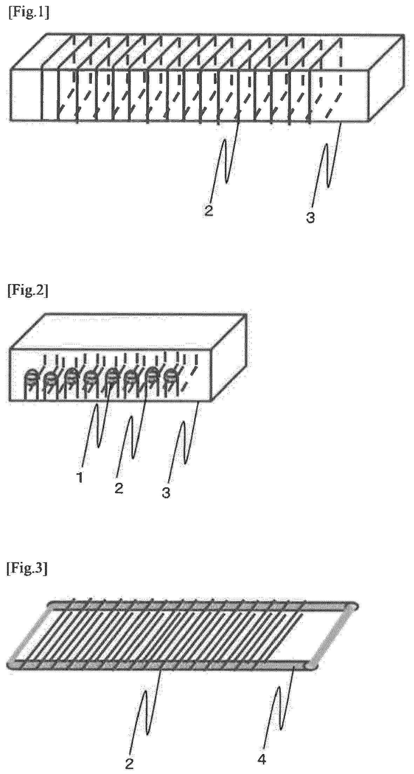

Examples of the method of disposing such a fluorine fiber or a fluorine fiber-containing composite fiber in parallel at least on the outermost part of a sliding surface of a sliding member in a direction substantially the same as a sliding direction to cover the sliding surface include the following methods: a method in which, as shown in FIG. 1, for example, a fiber 2 is wound helically around the perimeter of a sliding member 3, a substrate, with one end of the fiber fixed at a location not on the sliding surface of the sliding member 3 while applying such a slight tension that does not slacken the fiber 2, and after the winding is finished, the other end of the fiber is also fixed at a location not on the sliding surface; a method in which, as shown in FIG. 2, for example, large numbers of hooks 1 are provided on two lateral surfaces of a sliding member at substantially regular intervals, and while hanging the fiber 2 on the hooks 1, the fiber 2 is disposed in parallel on the undersurface (the sliding surface) of the sliding member 3; and a method in which, as shown in FIG. 3, the fiber 2 is wound around a frame-like substrate 4, and then the frame-like substrate 4 is held against the sliding surface of a sliding member to dispose and fix the fiber. In this case, plate-like substrates can also be used in place of the frame-like substrate.

Furthermore, the fluorine fiber or the fluorine fiber-containing composite fiber is preferably wound around the perimeter of the sliding member such that the sliding surface of the composite member is largely covered with the wound fluorine fiber or the wound fluorine fiber-containing composite fiber.

If the fiber is wound such that no space is formed between the wound fibers, the surface of the sliding member will be covered. Although it is not necessary that the fiber should be wound without a space to cover 100% of the sliding surface, the fiber is preferably wound without a space or wound with small spaces at regular intervals, for example, when the sliding member is held against an opposite sliding material and slid while uniformly applying pressure and heat.

In contrast, in a layer formed by the winding, the fibers may lie on top of each other to the extent that the effects of the present invention are not adversely affected.

The winding of the fiber may be uneven, and the winding may be ununiform (rough) under the influence of the shape of the sliding member, projections, members for mounting the sliding material, elastic deformation, or other factors preferably to the extent that the effects of the present invention are not adversely affected.

The winding may be carried out by hand. To wind the fiber industrially, conventional methods such as filament winding can be used.

The thus-produced low-friction sliding material of the present invention, in which the fiber is disposed in parallel, (or within $\pm30°$), is therefore anisotropic between the parallel direction and the orthogonal direction. To further improve the low-friction properties by utilizing such characteristics, the parallel direction of the fiber and the sliding direction are substantially the same.

This can reduce the decrease in sliding properties and the non-homogeneity due to the level difference of the fiber disposed in parallel.

For the phrase "the parallel direction and the sliding direction are substantially the same", the deviation in direction need not be strictly $\pm0°$, and the deviation in direction is only required to be within about $\pm30°$ so that the sliding resistance due to the level difference of the fiber disposed in parallel is extremely small.

The low-friction sliding material of the present invention has anisotropic sliding properties as described above and, therefore, is particularly suitable for applications requiring sliding properties in a specific direction.

In addition, the fiber can be disposed in parallel also at the corners of the sliding material continuously from the sliding surface, and, therefore, the sliding properties depending on the shape can be exhibited also at the corners.

The above-described characteristics satisfy the requirements of pressurizing low-friction sliding members used in toner fixing devices incorporated, for example, into imaging devices such as copiers and printers, and thus the low-friction sliding material of the present invention is a best-suited member used as such a low-friction pressurizing member for use in toner fixing devices.

Toner fixing devices are devices for fixing toner images to recording paper by passing a sheet of recording paper carrying unfixed toner images between two rolls and applying pressure and heat to the unfixed toner images, and in such devices, the low-friction sliding material of the present invention can be used as a member that is slid while applying pressure and/or heat. In particular, to increase the fixing rate, prevent fixing irregularities and paper wrinkles for improved image quality, reduce the size of fixing devices, and shorten the warm-up time for fixing devices at room temperature to get ready for fixing, devices in which one of two nip rolls is replaced with a fixing endless belt have been developed. In this method using a fixing endless belt, a pressurizing/heating member for applying pressure and heat is disposed inside the fixing endless belt, and the roll driven in rotation and the fixing endless belt are configured to nip a sheet to which toner images are transferred. This pressurizing/heating member disposed and fixed slides in only one direction between its surface and the internal surface of the fixing belt, and sliding materials that have low sliding resistance and are low in cost are desired. The low-friction sliding material of the present invention is best suited for use as this low-friction pressurizing member.

To further improve the durability, the fiber located at the sliding part may be impregnated with resin. As the resin for impregnation, thermosetting resins and thermoplastic resins can be used. Non-limiting examples of suitable thermosetting resins include phenolic resins, melamine resins, urea resins, unsaturated polyester resins, epoxy resins, polyurethane resins, diallyl phthalate resins, silicone resins, polyimide resins, vinyl ester resins, and modified resins thereof, and non-limiting examples of suitable thermoplastic resins include vinyl chloride resins, polystyrenes, ABS resins, polyethylenes, polypropylenes, fluorine resins, polyamide resins, polyacetal resins, polycarbonate resins, polyesters, and polyamides. In addition, synthetic rubbers or elastomers, such as thermoplastic polyurethane, butadiene rubber, nitrile rubber, neoprene, and polyester, and mixtures thereof are suitable for use. In particular, resins containing a phenolic resin and a polyvinyl butyral resin as principal components, unsaturated polyester resins, vinyl ester resins, polyolefin resins such as polyethylene and polypropylene, and polyester resins are suitable for use in terms of shock resistance, dimensional stability, strength, cost, and other properties.

To these thermosetting resins and thermoplastic resins, various additives commonly used in industry for the purpose of improving the properties or the productivity in manufacturing and processing according to the intended use may be added. For example, denaturants, plasticizers, fillers, release agents, colorants, diluents, and other additives can be added.

As used herein, the term "principal component" refers to a component whose weight percentage is highest among the components other than solvents, and the resin containing a phenolic resin and a polyvinyl butyral resin as principal components means that the weight percentages of these two resins are highest and second highest (in no particular order).

For the resin impregnation, when thermosetting resins are used, a method is typically used in which thermosetting resins are dissolved in a solvent to prepare a varnish, with which the fiber is impregnated and coated, for example, by knife coating, roll coating, comma coating, or gravure coating. When thermoplastic resins are used, a method such as melt-extrusion lamination is typically used.

In the present invention, the fiber disposed at a location not on the sliding surface may be impregnated with resin as described above to prevent displacement of the fiber and prevent the fiber from spreading out extensively if the fiber should break on the sliding surface. In this case, spot gluing at a specific position may be used in place of the resin impregnation over the whole surface.

To the sliding surface of the low-friction sliding material of the present invention, additives such as fluorine-based lubricants may be optionally added.

In addition, to prevent slipping or displacement between the fiber and the sliding member during and/or after winding the fiber around the sliding member or the substrate, the surface of the sliding member or the substrate may be, for example, finely grooved in the same direction as the winding direction or surface roughened.

Examples

The examples of the present invention will now be described together with comparative examples.

The properties used in the examples were determined as described below.

(1) Fiber Coverage

An area of $3 \times 5$ mm in a sliding surface covered with a fiber was micrographed using a VHX-2000 microscope available from Keyence Corporation at a magnification of 30X, and using this micrograph, the fiber coverage was calculated from the ratio of the area of the fiber effectively contributing to sliding to the area of other parts (e.g., exposed sliding member).

(2) Coefficient of Kinetic Friction

Using a TriboGear surface property tester (TYPE: HEIDON-14DR) available from Shinto Scientific Co., Ltd., the coefficient of kinetic friction was determined in a constant-temperature and constant-humidity environment ($20 \pm 2°C$, $60 \pm 5\%$ RH) at a moving speed of 100 mm/min and a load of 1,000 gf.

Typically, the coefficient of friction is determined in such a manner that a test specimen is set on a plane indenter (area: $63 \times 63$ mm), standard equipment of the apparatus; a SUS 304 stainless steel plate (mirror-finished), a sliding opposite material, is set on a moving table; and the table is moved at a constant speed. In the model test carried out this time, however, a SUS 304 stainless steel plate ($235 \times 80 \times 3$ mm) with a fiber wound around was used as a test specimen and set on the moving table. As a sliding opposite material, a SUS 304 stainless steel plate (mirror-finished) having a size of $63 \times 63 \times 3$ mm (four sides of which were subjected to 2.5 mm round chamfering to avoid the influence of edges) was provided and attached to the plane indenter for use.

In winding the fiber, one end of the fiber was adhesively fixed to the surface opposite to the sliding surface of the SUS 304 stainless steel plate ($235 \times 80 \times 3$ mm), and the fiber was wound helically around the perimeter of the sliding member while applying such a slight tension that does not slacken the fiber. After the winding is finished, the other end of the fiber was also adhesively fixed to the surface opposite to the sliding surface. At the one end and the other end, the winding was carried out such that the fiber did not protrude out of the ends of the sliding member and a margin with an appropriate size was left at each end of the sliding member. These margins were outside the moving range of the plane indenter. These margins were not taken into account in calculation of the coverage.

The fiber was wound around the SUS 304 stainless steel plate in the longitudinal direction and the transverse direction, and the coefficients of friction were determined in two directions parallel and orthogonal to the sliding direction.

The criteria for the coefficient of kinetic friction was as follows: coefficients of friction of less than 0.071: best, 0.071 to less than 0.086: next best, 0.086 to less than 0.101: better, 0.101 to less than 0.116: good, 0.116 to less than 0.130: fair, and more than 0.130: bad.

In Comparative Example 2, a woven fabric provided was fixed to the sliding surface of the SUS 304 stainless steel plate with a dedicated clamp, standard equipment of the surface property tester, and used as a test specimen. Also for the woven fabric, the coefficient of friction was determined in two directions: the weaving direction and the direction orthogonal to the weaving direction.

(3) Durability (Ring-on-Disk Abrasion Test)

The durability was determined in accordance with the A method (Testing Methods for Sliding Wear Resistance of Plastics) of JIS K 7218: 1986. Using a MODEL EFM-III-EN available from Orientec Co., Ltd. as a ring-on-disk abrasion tester, the test was carried out at three friction loads of 20 MPa, 10 MPa, and 5 MPa and a friction speed of 10 mm/sec to determine the sliding torque at a friction sliding distance of 100 m.

A test specimen was prepared by winding a fiber around a polyacetal resin plate of $30 \times 34 \times 2$ mm and fixed to a sample holder.

At this time, one end of the fiber was tied to a screw attached to the lateral surface (the surface which was not the sliding surface) of the polyacetal resin plate, and the fiber is wound helically around the perimeter of the sliding member while applying such a slight tension that does not slacken the fiber. After the winding is finished, the other end of the fiber was also fixed to the lateral surface (the surface which was not the sliding surface). At the one end and the other end, the winding was carried out such that the wound fiber did not protrude out of the ends of the sliding member and a margin of 2 mm was left at each end of the sliding member, as a result of which the area of the sliding surface was $30 \times 30$ mm. These margins were not taken into account in calculation of the coverage.

In Comparative Example 2, a woven fabric provided was set on the polyacetal resin plate and fixed with a dedicated attachment, standard equipment of the ring-on-disk abrasion tester, and used as a test specimen.

The opposite material used was a hollow cylindrical opposite material made of S45C having an outer diameter of 25.6 mm, an inner diameter of 20 mm, and a length of 15 mm, the surface of which was polished with sandpaper to a roughness in the range of 0.8 $\mu$mm $\pm$ 0.1 Ra as measured with a roughness tester (SJ-201 available from Mitsutoyo Corporation).

The change in average coefficient of friction from 10 minutes to 150 minutes after the start of the test and the surface condition of the test specimen after friction sliding were observed, and the durability was evaluated as follows: the change in coefficient of friction based on the coefficient of friction after 10 minutes was less than 15%, and the fiber suffered almost no abrasion: best, the change in coefficient of friction based on the coefficient of friction after 10 minutes was less than 15%, but the fiber suffered slight abrasions: good, the change in coefficient of friction based on the coefficient of friction after 10 minutes from abrasion was 15% to 30%: fair, and the fiber suffered severe abrasions, and the coefficient of friction increased by 30% or more or the fiber was torn: bad.

Example 1

A PTFE fiber of 440 dtex, 60 filaments, and 300 t/m (twists per meter) was used as a fluorine fiber and wound around a sliding member to produce a sliding material model. For the sliding member, a SUS 304 stainless steel plate of $235 \times 80 \times 3$ mm was used for the measurement of coefficients of kinetic friction, and a polyacetal resin plate of $30 \times 30 \times 2$ mm was used for the ring-on-disk abrasion test.

The winding was carried out by hand such that the wound fibers did not lie on top of each other and no space was formed. The adjacent fibers were aligned in parallel in the same direction. Both the test specimen for the measurement of coefficients of kinetic friction and the ring-on-disk abrasion test specimen had fibers coverage of 100%.

Example 2

A doubled and twisted fiber of a PTFE fiber of 440 dtex, 60 filaments, and 300 t/m (twists per meter) and a PPS fiber of 220 dtex, 50 filaments, and 300 t/m (twists per meter) was used as a fluorine fiber-containing composite fiber. The weight percentage of the fluorine fiber was 67%.

The PPS fiber selected as the other fiber to be combined with the fluorine fiber had a higher tensile strength and a lower creep rate than the PTFE fiber as described below.

PTFE fiber: tensile strength: 616 cN, creep rate: 4.5%
PPS fiber: tensile strength: 924 cN, creep rate: 2.0%

For the tensile strength, the breaking strength measured in accordance with JIS L 1013: 2010 (the method for testing chemical fiber filament yarn) was used as the tensile strength. For the creep rate, with one end of the fiber fixed under standard conditions (20°C × 65% RH), a load was hung at the other end that applies a tension that is 20% of the breaking strength to the fiber. After one hour, the length ($Lc_1$) of the fiber was measured, and the creep rate was determined by the following equation that represents how much the fiber was stretched from the initial length ($Lc_0$). The initial length was defined as the length under an initial load (5.88 mN × displayed tex number).

$$\text{Creep rate } (\%) = [(Lc_1 - Lc_0)/Lc_0] \times 100$$

Except using the composite fiber described above, the same procedure as in Example 1 was repeated. The fiber coverage was 100% for both the test specimen for the measurement of coefficients of kinetic friction and the ring-on-disk abrasion test specimen.

Example 3

The same procedure as in Example 2 was repeated except that the fiber was wound such that space was formed between the wound fibers at substantially regular intervals to reduce the number of windings around the test specimen to approximately 90% of the number of windings in Example 2. The adjacent fibers were aligned in parallel in the same direction. The fiber coverage of the test specimen for the measurement of coefficients of kinetic friction was 89% in two directions, and the fiber coverage of the ring-on-disk abrasion test specimen was 90%.

Example 4

The same procedure as in Example 2 was repeated except that the fiber was wound such that space was formed between the wound fibers at substantially regular intervals to reduce the number of windings around the test specimen to approximately 70% of the number of windings in Example 2. The fiber coverage of the test specimen for the measurement of coefficients of kinetic friction was 68% in the parallel direction and 69% in the orthogonal direction, and the fiber coverage of the ring-on-disk abrasion test specimen was 71%.

Comparative Example 3 The same procedure as in Example 2 was repeated except that the fiber was wound such that space was formed between the wound fibers at substantially regular intervals to reduce the number of windings around the test specimen to approximately 50% of the number of windings in Example 2. The fiber coverage of the test specimen for the measurement of coefficients of kinetic friction was 51% in the parallel direction and 50% in the orthogonal direction, and the fiber coverage of the ring-on-disk abrasion test specimen was 50%.

Comparative Example 1

The same procedure as in Example 1 was repeated except that a PPS fiber of 220 dtex, 50 filaments, and 300 t/m (twists per meter) was used as an example not containing a fluorine fiber. The fiber coverage was 100% for both the test specimen for the measurement of coefficients of kinetic friction and the ring-on-disk abrasion test specimen.

Comparative Example 2

Using a PPS fiber of 220 dtex, 50 filaments, and 300 t/m (twists per meter) as warp and weft of a base woven fabric fiber and a PTFE fiber of 440 dtex, 60 filaments, and 300 t/m (twists per meter) as warp and weft of a woven fabric for a sliding material, a double-layer plain woven fabric was produced using a rapier loom such that the weave density was 70 + 70 ends per inch (2.54 cm) (ends of the woven fabric for a sliding material + ends of the base woven fabric per inch (2.54 cm)) and 60 + 60 picks per inch (2.54 cm) (picks of the woven fabric for a sliding material + picks of the base woven fabric per inch (2.54 cm)) and that the woven fabric for a sliding material and the base woven fabric were intertwined through the intertwinement of the warp of the woven fabric for a sliding material and the warp of the base woven fabric at a binding frequency of 0.2. The fabric was then scoured in a scouring kier at 80°C and set at 200°C.

In this woven fabric, the fluorine fiber percentage of the surface to be used as a sliding surface was adjusted to be 95% by area percentage. Using the woven fabric, the measurement of coefficients of kinetic friction and the ring-on-disk abrasion test were performed. The fiber coverage was examined under a microscope. In both the measurement and the test, the sliding member was hidden by 100%, and the coverage was 100%.

Table 1 shows the results of the measurements of coefficients of kinetic friction using a TriboGear and the ring-on-disk abrasion tests of Examples 1 to 4 and Comparative Examples 1 to 3.

[Table 1]

| | | | Example 1 | Example 2 | Example 3 | Example 4 | Comparative Example 3 | Comparative Example 1 | Comparative Example 2 |
|---|---|---|---|---|---|---|---|---|---|
| Fiber type | | | Fluorine fiber 100wt% | Fluorine fiber 67wt% | Fluorine fiber 67wt% | Fluorine fiber 67wt% | Fluorine fiber 67wt% | - | Multi-layer plain woven fabric of fluorine fiber & PPS fiber note) |
| | | 2 | - | PPS fiber 33wt% | PPS fiber 33wt% | P PS fiber 33wt% | PPS fiber 33wt% | PPS fiber 100wt% | |
| Dynamic friction coefficien t | Parrallel direction | Specimen surface coverage by | 100% | 100% | 89% | 68% | 51% | 100% | 100% |
| | | Test result | 0.082 | 0.095 | 0.09 | 0.097 | 0.128 | 0.175 | 0.07 |
| | | Decision | next best | better | better | better | fair | bad | best |
| | Orthogonal direction | Specimen surface coverage by | 100% | 100% | 89% | 69% | 50% | 100% | 100% |
| | | Test result | 0.103 | 0.112 | 0.112 | 0.115 | 0.134 | 0.198 | 0.083 |
| | | Decision | good | good | good | good | fair | bad | next best |
| Durability | Ring abrasion test | Specimen surface coverage by | 100% | 100% | 90% | 71% | 50% | 100% | 100% |
| | | Decision | good | good | good | good | fair | best | best |
| Note) Fluorine fiber area percentage of the sliding surface: 95% | | | | | | | | | |

As can be seen from the table, the sliding materials of Examples 1 to 4 had good balances between low coefficients of friction and durability as compared to Comparative Examples 1 and 2.

In particular, in Examples 1 to 4, there was almost no abrasion or slight abrasions, if any, in the ring-on-disk abrasion test, and the coefficients of kinetic friction were stably low.

In Comparative Example 3, since the fiber coverage was 51% or 50%, the sliding member came into contact with the plane indenter via spaces between the fibers during the measurement of coefficients of kinetic friction, resulting in slightly reduced sliding properties, and in the ring-on-disk abrasion test, the abrasion of the fluorine fiber resulted in an increased contact area of the PPS fiber, leading to an increased coefficient of friction. However, the practical performance can be expected as compared to Comparative Example 1. In Comparative Example 1, the sliding properties were obviously poor because of not using a fluorine fiber.

In Comparative Example 2, although the low coefficient of friction and durability were excellent, a complicated weaving process for processing fibers into a woven fabric in advance was required, which was laborious and costly. Furthermore, the dedicated clamp and the dedicated attachment of the tester were used when the woven fabric was fixed to a sliding member, and, in addition, a dedicated fixer will be required also when the woven fabric is used as a sliding member. In contrast, it is clear that Examples of the present invention are extremely easy to carry out and only require a simplified process.

In Examples 1 to 4, as compared to the coefficients of kinetic friction in the direction parallel to the winding direction, the coefficients of kinetic friction in the orthogonal direction were slightly high. The fiber remained helically wound, and the adjacent fibers disposed in parallel in the same direction remained unchanged even after the test.

Furthermore, particularly in the case where the fiber is wound with spaces as in Comparative Example 3, the fiber winding direction has a slight gradient in the width direction of a test specimen, but in fact, the gradient in the winding direction is negligibly small because the fiber diameter is negligibly small as compared to the width dimension of the substrate to wind the fiber around. The measurement with a protractor confirmed that the gradient was less than 1°.

As a result, in addition to confirming that the fibers were disposed in parallel in substantially the same direction, it was also confirmed that in the coefficient of kinetic friction test, the winding direction was parallel and orthogonal to the sliding direction, and the directions were the same.

Industrial Applicability

The low-friction sliding material of the present invention can be used widely as a pressurizing sliding member, and, in particular, can be used as a pressurizing sliding member suitable for toner fixing device applications.

Description of Symbols

1: Hook
2: Fiber
3: Sliding member
4: Frame-like substrate

**Claims**

1. A low-friction sliding material comprising:

   a sliding member (3) having a sliding surface; and
   a fluorine fiber or a fluorine fiber-containing composite fiber (2) that is disposed in parallel at least on the outermost part of the sliding surface in a direction the same as a sliding direction with a deviation within ±30°, **characterized in that** the fiber is wound around the outer perimeter of the sliding member such that 60% or more of the sliding surface is covered with the fiber.

2. The low-friction sliding material according to claim 1, wherein the sliding member (3) has corners.

3. The low-friction sliding material according to claim 1 or 2, wherein the sliding surface of the sliding member (3) is covered with the fluorine fiber or the fluorine fiber-containing composite fiber (2) wound around the outer perimeter of the sliding member.

**4.** A low-friction pressurizing member for use in toner fixing devices, wherein the low-friction sliding material according to any one of claims 1 to 3 is used as a sliding member that applies pressure during fixing in a toner fixing device.

**Patentansprüche**

**1.** Reibungsarmes Gleitmaterial, umfassend:

ein Gleitelement (3), das eine Gleitfläche aufweist; und
eine Fluorfaser oder eine fluorfaserenthaltende Verbundfaser (2), die zumindest auf dem äußersten Teil der Gleitfläche in eine Richtung parallel angeordnet ist, welche dieselbe wie eine Gleitrichtung mit einer Abweichung innerhalb von ±30° ist,
**dadurch gekennzeichnet,**
**dass** die Faser um den Außenumfang des Gleitelements derart herum gewickelt ist, dass 60% oder mehr der Gleitfläche mit der Faser abgedeckt sind.

**2.** Reibungsarmes Gleitmaterial gemäß Anspruch 1, wobei das Gleitelement (3) Ecken aufweist.

**3.** Reibungsarmes Gleitmaterial gemäß Anspruch 1 oder 2, wobei die Gleitfläche des Gleitelements (3) mit der Fluorfaser oder der fluorfaserenthaltenden Verbundfaser (2) abgedeckt ist, die um den Außenumfang des Gleitelements herum gewickelt ist.

**4.** Reibungsarmes Druckbeaufschlagungselement zur Verwendung bei Tonerfixiervorrichtungen, wobei das reibungsarme Gleitmaterial gemäß einem der Ansprüche 1 bis 3 als ein Gleitelement verwendet wird, das während des Fixierens in einer Tonerfixiervorrichtung Druck ausübt.

**Revendications**

**1.** Matériau de glissement à faible frottement comprenant :

un matériau de glissement (3) ayant une surface de glissement ; et
une fibre fluorée ou une fibre composite contenant une fibre fluorée (2) qui est disposée en parallèle au moins sur la partie située le plus à l'extérieur de la surface de glissement dans une direction identique à une direction de glissement avec une déviation dans la plage de ±30°,

**caractérisé en ce que** :

la fibre est enroulée autour du périmètre externe de l'élément de glissement de sorte que 60% ou plus de la surface de glissement est couverte avec la fibre.

**2.** Matériau de glissement à faible frottement selon la revendication 1, dans lequel l'élément de glissement (3) a des coins.

**3.** Matériau de glissement à faible frottement selon la revendication 1 ou 2, dans lequel la surface de glissement de l'élément de glissement (3) est couverte avec la fibre fluorée ou la fibre composite contenant une fibre fluorée (2) enroulée autour du périmètre externe de l'élément de glissement.

**4.** Elément de mise en pression à faible frottement destiné à être utilisé dans les dispositifs de fixation de toner, dans lequel le matériau de glissement à faible frottement selon l'une quelconque des revendications 1 à 3 est utilisé en tant qu'élément de glissement qui applique la pression pendant la fixation dans un dispositif de fixation de toner.

[Fig.1]

2

3

[Fig.2]

1

2

3

[Fig.3]

2

4

**EP 3 091 399 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1098921 A
- JP 2008150724 A
- JP 2009035827 A
- JP 2008045722 A
- JP 2010164999 A
- JP 2000154824 A
- US 2013330111 A
- JP 2008070913 A
- JP H04119224 B
- EP 2677071 A
- JP 2011042413 A